# EUROPÄISCHE PATENTANMELDUNG

(11) **EP 0 870 958 A1**
(43) Veröffentlichungstag der Anmeldung: **14.10.1998**
(21) Anmeldenummer: 97810203.6
(22) Anmeldetag: 08.04.1997
(51) Int. Cl.: F16K 31/06

(54) **Elektromagnetisches Ventil für hydraulische Medien**

(71) Anmelder: Wärtsilä NSD Schweiz AG, 8401 Winterthur (CH)
(72) Erfinder: Wunder, Alfred Franz, 8442 Hettlingen (CH)
(74) Vertreter: Heubeck, Bernhard

(57) **Zusammenfassung**

Das Ventil umfasst ein Ventilgehäuse (4), einen Ventilschieber (6) und zwei Elektromagneten (2). Der Ventilschieber (6) ist im Gehäuse in einer Durchbohrung (13) verschiebbar angeordnet. Die Durchbohrung und der Ventilschieber sind mit einer Hartbeschichtung versehen, um die Anzahl von Schaltbewegungen zu erhöhen.

## Beschreibung

Die Erfindung betrifft ein elektromagnetisches Ventil für hydraulische Medien gemäss dem Oberbegriff des Anspruches 1.

Ventile dieser Art sind bekannt und enthalten ein Gehäuse und einen Ventilschieber, der im Gehäuse verschiebbar angeordnet ist. An den Stirnseiten des Ventilschiebers ist je ein Ankerteil vorgesehen, dem jeweils ein Elektromagnet zugeordnet ist, derart, dass bei Erregung der Elektromagneten der Ventilkörper jeweils verschoben wird. Mit einem solchen Ventil werden zwar kurze Schaltzeiten erreicht jedoch ist die Abnutzung insbesondere an den Steuerkanten sehr stark, so dass das Ventil bereits nach einer relativ geringen Anzahl von Schaltbewegungen ersetzt werden muss.

Der Erfindung liegt die Aufgabe zugrunde, ein elektromagnetisches Ventil zu verbessern.

Diese Aufgabe wird erfindungsgemäss durch die Merkmale des Anspruches 1 gelöst.

Die mit der Erfindung erzielbaren Vorteile sind darin zu sehen, dass durch die Hartbeschichtung die Gleiteigenschaften und die Lebensdauer verbessert werden und dass durch Minimierung der Wirbelstromverluste sehr kurze Schaltimpulse zur Betätigung des Ventiles ausreichen.

Nachfolgend wird die Erfindung anhand der beiliegenden Zeichnungen erläutert.

Es zeigen:
- Figur 1: Einen Schnitt durch ein Ausführungsbeispiel eines erfindungsgemässen Ventils;
- Figur 2: eine Einzelheit "A" in Figur 1 im grösseren Massstab und
- Figur 3: eine Einzelheit "B" in Figur 1 im grösseren Massstab.

Das Ventil besteht im wesentlichen aus einem Ventilteil 1 und zwei Antriebsteilen 2, die als Elektromagnete ausgebildet und mittels Schrauben 3 am Ventilteil 1 befestigt sind.

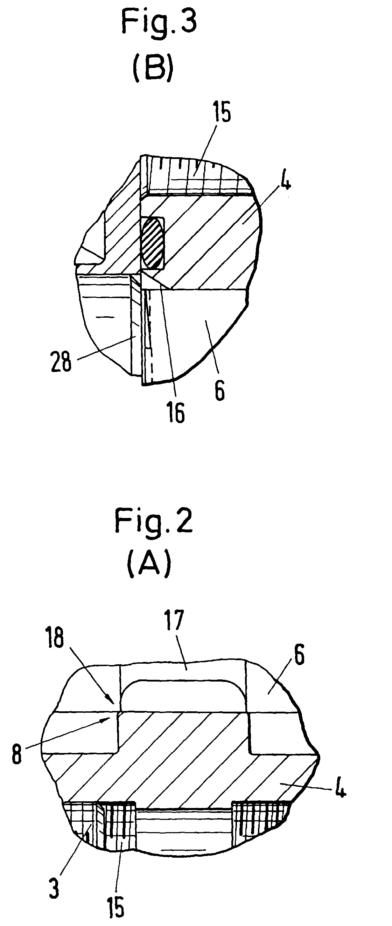

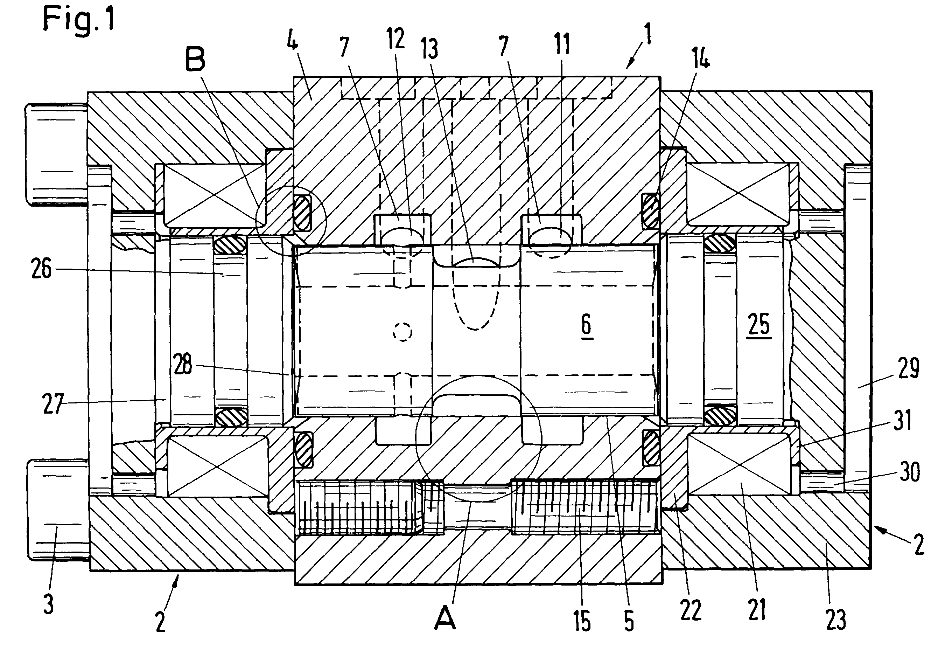

Der Ventilteil besteht aus einem Gehäuse 4 mit einer Durchbohrung 5 entlang der Zylinderachse und aus einem Ventilschieber 6, der in der Durchbohrung hin und her bewegbar angeordnet ist. Das Gehäuse 4 besteht aus einem magnetischen Werkstoff. Im Gehäuse 4 sind zwei Ringnuten 7 ausgebildet, die parallel verlaufend in der Durchbohrung 5 ausgebildet sind, derart, dass die nebeneinanderliegenden Kanten jeweils eine Steuerkante 8 bilden (Figur 2). Ferner sind ein Zufuhrkanal 11 und ein Rücklaufkanal 12, die jeweils in eine Ringnut 7 münden sowie ein Verbraucherkanal 13 im Gehäuse ausgebildet, der in die Durchbohrung 5 mündet. In den Stirnflächen des Gehäuses 4 sind ringförmige Ausnehmungen zur Aufnahme von Dichtungsringen 14 vorgesehen. Es sind vier Gewindelöcher 15 im Gehäuse 4 ausgebildet, um die Antriebsteile am Gehäuse zu befestigen. Im Gehäuse 1 sind an beiden Enden der Durchbohrung jeweils eine Abschrägung 16 ausgebildet (Figur 3).

Der Ventilschieber 6 ist zylinderförmig und weist eine ringförmige Nut 17 auf, derart, dass eine Ringkammer entsteht, deren Kanten die Steuerkanten 18 am Ventilschieber 3 bilden (Figur 2). Der Ventilschieber besteht aus magnetisierbaren Werkstoff. Die Durchbohrung 13 im Gehäuse 4 und der Ventilschieber 6 und insbesondere die Steuerkanten 8, 18 sind mit einer Hartbeschichtung versehen, die z.B. aus Wolframkarbid oder Titannitrit besteht.

Jeder Elektromagnet besteht aus einer Spule 21, einen Spulenkörper 22, auf welchem die Spule direkt aufgewickelt ist und einen Ankerteil 23. Der Ankerteil 23 ist quaderförmig ausgebildet und besteht aus einem magnetisierbaren Material. Ausgehend von einer Stirnseite ist im Ankerteil 23 eine ringförmige Ausnehmung ausgebildet, derart, dass ein zylinderförmiger Ansatz 25 im Zentrum vorhanden ist. Im Ansatz ist eine Nut zur Aufnahme eines Dichtungsringes 26 ausgebildet. Am Nutengrund ist eine Rille 27 ausgebildet. Ferner weist der Ansatz 25 am freien Ende einen konischen Abschnitt 28 auf. In der ringförmigen Ausnehmung ist der Spulenkörper 22 mit der Spule 21 angeordnet. An der anderen Stirnseite des Ankerteiles 23 ist eine zylinderförmige Ausnehmung 29 ausgebildet. Ausgehend von dieser Ausnehmung sind Durchführungslöcher 30 für die Spulenanschlussleitungen ausgebildet, die sich durch den Flanschteil 31 des Spulenkörpers 12 erstrecken.

Zur Betätigung des Ventils wird jeweils ein Elektromagnet erregt und der Ventilschieber 6 angezogen. Wird die Erregerspannung abgeschaltet, so wird der Ventilschieber durch die verbleibende Remanenz festgehalten. Der Erregerstrom erzeugt Wirbelströme im Spulenkörper. Um die Wirbelstromverluste zu minimieren, besteht der Spulenkörper aus Titan, welches eine geringe elektrische Leitfähigkeit von 0.23 · 10⁵ (Ω cm)⁻¹ aufweist.

Das Ventil umfasst ein Ventilgehäuse 4, einen Ventilschieber 6 und zwei Elektromagneten 2. Der Ventilschieber 6 ist im Gehäuse in einer Durchbohrung 13 verschiebbar angeordnet. Die Durchbohrung und der Ventilschieber sind mit einer Hartbeschichtung versehen, um die Anzahl von Schaltbewegungen zu erhöhen.

## Patentansprüche

1. Elektromagnetisches Ventil für hydraulische Medien, mit einem Ventilgehäuse, mit einem Ventilschieber, und mit zwei Elektromagneten, wobei der Ventilschieber jeweils bei der Erregung eines Elektromagneten in eine Schaltstellung bewegt und bei Abschaltung der Erregerspannung durch die verbleibende Remanenz festgehalten wird, dadurch gekennzeichnet, dass die Durchbohrung (13) im Gehäuse (4) und der Ventilschieber (6) mit einer Hartbeschichtung versehen sind.

2. Ventil nach Anspruch 1, dadurch gekennzeichnet, dass die Länge des Ventilgehäuses (4) kleiner als das 2,5-fache des Aussendurchmessers des Ventilschiebers (6) beträgt.

3. Ventil nach einem der Ansprüche 1 oder 2, dadurch gekennzeichnet, dass die Hartbeschichtung aus Titannitrit, Wolframkarbid oder dgl. besteht.

4. Ventil nach einem der Ansprüche 1 bis 3, gekennzeichnet durch einen Spulenkörper (22) für die Magnetspule (21), der aus einem Material mit einer elektrischen Leitfähigkeit kleiner als 3,00 · 10⁵ (Ω cm)⁻¹ besteht.
